# EUROPÄISCHE PATENTSCHRIFT

(11) **EP 3 655 682 B1**
(45) Veröffentlichungstag und Bekanntmachung des Hinweises auf die Patenterteilung: **14.07.2021**
(21) Anmeldenummer: 18779227.0
(22) Anmeldetag: 13.09.2018
(51) Int. Cl.: F16J 15/44, F16J 15/40, F01D 11/04, F16J 15/447, F16J 15/453, B22F 5/10

(54) **DICHTUNGSRING**
SEALING RING
BAGUE D'ÉTANCHÉITÉ

(30) Priorität: 18.09.2017 DE 102017216463
(43) Veröffentlichungstag der Anmeldung: 27.05.2020
(73) Patentinhaber: Siemens Energy Global GmbH & Co. KG, 81739 München (DE)
(72) Erfinder: BREINDL, Martin, 92369 Sengenthal (DE); TRÜBEL, Armin, 60350 Norrköping (SE)
(86) Internationale Anmeldenummer: PCT/EP2018/074685
(87) Internationale Veröffentlichungsnummer: WO 2019/053095

(56) Entgegenhaltungen:
- EP-A1- 3 130 827
- WO-A1-2013/160469
- CN-Y- 201 007 355
- US-A- 4 257 617

## Beschreibung

Die vorliegende Erfindung betrifft einen Dichtungsring zur Abdichtung eines ringförmigen Spaltes zwischen einer Welle und einem diese umgebenden Lagerkörper umfassend zwei lösbar aneinander befestigbare, ringsegmentförmige Dichtungsringhälften und eine Mehrzahl von axial benachbart an der Innenumfangsfläche angeordneten, radial einwärts vorstehenden und umlaufend ausgebildeten Dichtspitzen.

Dichtungsringe der eingangs genannten Art sind im Stand der Technik bekannt. Sie werden insbesondere dazu eingesetzt, einen ringförmigen Spalt zwischen einer Welle und einem diese umgebenden Lagerkörper, der insbesondere an einer eine Dampfkammer und eine Ölkammer einer Dampfturbine voneinander trennenden Gehäusewand angeordnet oder ausgebildet ist, abzudichten, um zu verhindern, dass Dampf in die Ölkammer bzw. Öl in die Dampfkammer gelangen kann. Bei den Dichtungsringhälften handelt es sich normalerweise um Schmiederohlinge aus Stahl, die bereichsweise einer mechanischen Bearbeitung unterzogen wurden. Die Dichtspitzen sind als separate Bauteile vorgesehen, die meist aus Aluminium gefertigt und in an der Innenumfangsfläche des Dichtungsrings ausgebildete Ringnuten eingelegt und verstemmt sind. Für den Einsatz von Sperrluft ist in zumindest einer Dichtungsringhälfte mittels Bohren ein Sperrluftkanal eingebracht, der einen von außen zugänglichen Sperrlufteinlass zum Anschließen einer Sperrlufteinrichtung sowie einen im Bereich der Dichtspitzen in die Innenumfangsfläche mündenden Sperrluftauslass aufweist. Ein weiterer mittels Bohren hergestellter Kanal, der von der Innenumfangsfläche zu einer Seitenfläche einer Dichtungsringhälfte führt, bildet einen Druckmesskanal, an den eine Druckmesseinrichtung angeschlossen werden kann, um den aktuellen Druck der Sperrluft zu erfassen und eine optimale Druckeinstellung zu gewährleisten. Zum Abführen von sich zwischen den Dichtspitzen ansammelndem Öl ist der Dichtungsring ferner mit einem Ölrückführkanal versehen, der sich von der Innenumfangsfläche in Richtung einer Seitenfläche der entsprechenden Dichtungsringhälfte erstreckt und ebenfalls unter Einsatz eines Bohrverfahrens eingebracht wurde.

Ein Nachteil des zuvor beschriebenen bekannten Dichtungsrings besteht darin, dass dieser einen komplexen und fertigungsintensiven Aufbau mit vielen Einzelteilen und hohem Eigengewicht aufweist. Zudem ist es wünschenswert, das funktionale Design des bekannten Dichtrings weiter zu verbessern.

Beispielsweise wird in der CN 201007355 Y ein beweglicher Ölverschluss mit Luftfilmdichtung offenbart.

Beispielsweise betrifft die WO 2013/160469 A1 eine Vorrichtung zum Abdichten eines Hochdruckbereichs in einer Turbomaschine gegen einen Niederdruckbereich in der Turbomaschine.

Vor diesem Hintergrund ist es eine Aufgabe der vorliegenden Erfindung, einen Dichtungsring der eingangs genannten Art mit alternativem Aufbau zu schaffen, der die zuvor genannten Nachteile zumindest teilweise behebt.

Zur Lösung dieser Aufgabe schafft die vorliegende Erfindung einen Dichtungsring der eingangs genannten Art, der dadurch gekennzeichnet ist, dass die Dichtspitzen einteilig mit den Dichtungsringhälften ausgebildet sind. Dank einer solchen einteiligen Ausbildung weist der erfindungsgemäße Dichtungsring eine geringe Anzahl von Einzelteilen auf. Entsprechend lässt sich der erfindungsgemäße Dichtungsring einfach fertigen und montieren, was geringe Kosten nach sich zieht. Somit betrifft die vorliegende Erfindung einen Dichtungsring zur Abdichtung eines ringförmigen Spaltes zwischen einer Welle und einem diese umgebenden Lagerkörper, umfassend zwei ringsegmentförmige Dichtungsringhälften und eine Mehrzahl von axial benachbart an der Innenumfangsfläche angeordneten, radial einwärts vorstehenden und umlaufend ausgebildeten Dichtspitzen, wobei die Dichtspitzen einteilig mit den Dichtungsringhälften ausgebildet sind.

Bevorzugt sind die Dichtungsringhälften mit einem während der additiven Fertigung hergestellten Sperrluftkanalsystem versehen, das einen Sperrlufteinlasskanal, zumindest einen mit diesem verbundenen Sperrluftverteilerkanal und mehrere mit dem Sperrluftverteilerkanal verbundene, im Bereich der Dichtspitzen in die Innenumfangsfläche mündende Sperrluftauslasskanäle aufweist. Der wesentliche Vorteil eines solchen Sperrluftkanalsystems besteht darin, dass die Sperrluft über den Dank der additiven Fertigung frei gestaltbaren Sperrluftverteilerkanal ohne zusätzlichen fertigungstechnischen Aufwand an unterschiedlichsten Umfangspositionen im Bereich der Dichtspitzen in die Innenumfangsfläche des Dichtungsring eingeleitet werden kann, wodurch die mit dem Dichtungsring einhergehende Dichtwirkung dank optimierter Sperrluftzufuhr optimiert werden kann.

Gemäß einer Ausgestaltung der vorliegenden Erfindung sind die Dichtungsringhälften und entsprechend die Dichtspitzen aus Aluminium hergestellt, was in erster Linie mit einer guten Dichtwirkung und einem sehr geringen Eigengewicht einhergeht. Darüber hinaus ist Aluminium hinreichend weich, um Anstreifschäden bei Wellenkontakt zu verhindern.

Vorteilhaft sind Seitenflächen der Dichtungsringhälften mit Versteifungsrippen versehen, was eine vergleichsweise dünnwandige Ausbildung der Dichtungsringhälften und damit eine weitere Reduzierung des Eigengewichts und der Materialkosten ermöglicht. Die Versteifungsrippen können sich insbesondere in radialer Richtung erstrecken. Vorteilhaft sind aber auch sich in Umfangsrichtung erstreckende Versteifungsrippen vorgesehen.

Gemäß einer Ausgestaltung der vorliegenden Erfindung sind die Dichtungsringhälften unter Einsatz eines additiven Fertigungsverfahrens hergestellt, insbesondere aus einem pulverförmigen Ausgangswerkstoff. Als additives Fertigungsverfahren sei vorliegend beispielhaft das selektive Laserschmelzen (SLM) genannt. Der Einsatz eines additiven Fertigungsverfahrens hat den Vorteil, dass bezüglich des Designs des Dichtungsrings nur wenige Einschränkungen bestehen. Entsprechend lässt sich auch die Funktionalität des erfindungsgemäßen Dichtungsrings optimieren.

Insbesondere ist der Sperrluftverteilerkanal umlaufend ausgebildet und die Sperrluftauslasskanäle sind im Wesentlichen gleichmäßig über den Umfang des Dichtungsrings verteilt angeordnet. Entsprechend ergibt sich eine besonders gleichmäßige Beaufschlagung der zwischen den Dichtspitzen und der Welle vorhandenen Zwischenräume mit Sperrluft.

Bevorzugt ist zumindest eine Dichtungsringhälfte mit einem während der additiven Fertigung hergestellten Druckmesskanal versehen, der an das Sperrluftkanalsystem angeschlossen und dazu vorgesehen ist, das Sperrluftsystem mit einer Druckmesseinrichtung zu verbinden, wobei der Druckmesskanal insbesondere in den Sperrluftverteilerkanal mündet, wodurch ein besonders einfacher Aufbau erzielt wird. Unter Einsatz der Druckmesseinrichtung lässt sich die Sperrluftzufuhr prüfen, einstellen und/oder auch regeln.

Gemäß einer Ausgestaltung der vorliegenden Erfindung ist zumindest eine Dichtungsringhälfte mit wenigstens einem während der additiven Fertigung hergestellten Ölrückführkanal versehen, der sich von der Innenumfangsfläche in Richtung einer Seitenfläche der Dichtungsringhälfte erstreckt. Über einen solchen Ölrückführkanal kann Öl abfließen, das sich zwischen den Dichtspitzen gesammelt hat.

Bevorzugt sind mehrere Ölrückführkanäle vorgesehen, wobei zumindest ein Ölrückführkanal kurz vor der Seitenfläche der Dichtungsringhälfte endet. Der kurz vor der Seitenfläche endende Ölrückführkanal kann dann wahlweise aufgebohrt werden, wenn eine größere Ölrückführkapazität benötigt werden sollte. Auf diese Weise ist der erfindungsgemäße Dichtungsring flexibel an unterschiedliche Anforderungen an die Ölrückführkapazität anpassbar. Insbesondere ist an der Seitenfläche ein Bohrungsansatz vorgesehen, der eine Position zum Ansetzen eines Bohrwerkzeugs markiert, um ausgehend von der Seitenfläche einen Zugang zu dem noch verschlossenen Ölrückführkanal zu bohren. Ein solcher Bohrungsansatz erleichtert die Bohrbearbeitung.
Ferner schafft die vorliegende Erfindung zur Lösung der eingangs genannten Aufgabe ein Verfahren zur Herstellung eines erfindungsgemäßen Dichtungsrings, umfassend die Schritte: Herstellen der Dichtungsringhälften unter Einsatz eines additiven Fertigungsverfahrens, insbesondere unter Ausbildung des Sperrluftkanalsystems und/oder des Druckmesskanals und/oder eines oder der Ölrückführkanäle; Fräsen der Teilfugen der Dichtungsringhälften; Zusammenbau des Dichtungsrings durch Verspannen der Dichtungsringhälften und mechanisches Bearbeiten der Außenumfangsfläche und der Innenumfangsfläche des Dichtungsrings unter Ausbildung der Dichtspitzen, insbesondere unter Einsatz eines Dreh- und/oder Schleifverfahrens.

Gemäß einer Ausgestaltung des erfindungsgemäßen Verfahrens wird ferner ein Zugang zu einem im Rahmen der additiven Fertigung hergestellten Ölrückführkanal und/oder zu einem im Rahmen der additiven Fertigung hergestellten Druckmesskanal gebohrt.

Weitere Merkmale und Vorteile der vorliegenden Erfindung werden anhand der nachfolgenden Beschreibung von Ausführungsbeispielen erfindungsgemäßer Anordnungen unter Bezugnahme auf die Zeichnung deutlich. Darin ist
- Figur 1: eine perspektivische Ansicht eines Dichtungsrings gemäß einer Ausführungsform der vorliegenden Erfindung;
- Figur 2: eine Schnittansicht durch den in Figur 1 dargestellten Dichtungsring;
- Figur 3: eine Schnittansicht entlang der Linie III-III in Figur 2;
- Figur 4: eine Schnittansicht entlang der Linie IV-IV in Figur 2;
- Figur 5: eine Schnittansicht entlang der Linie V-V in Figur 2;
- Figur 6: eine vergrößerte Ansicht des in Figur 1 mit dem Bezugszeichen VI bezeichneten Ausschnitts;
- Figur 7: eine Schnittansicht entlang der Linie VII-VII in Figur 2; und
- Figur 8: ein Ablaufdiagramm eines erfindungsgemäßen Verfahrens zur Herstellung des in den Figuren 1 bis 7 dargestellten Dichtungsrings.

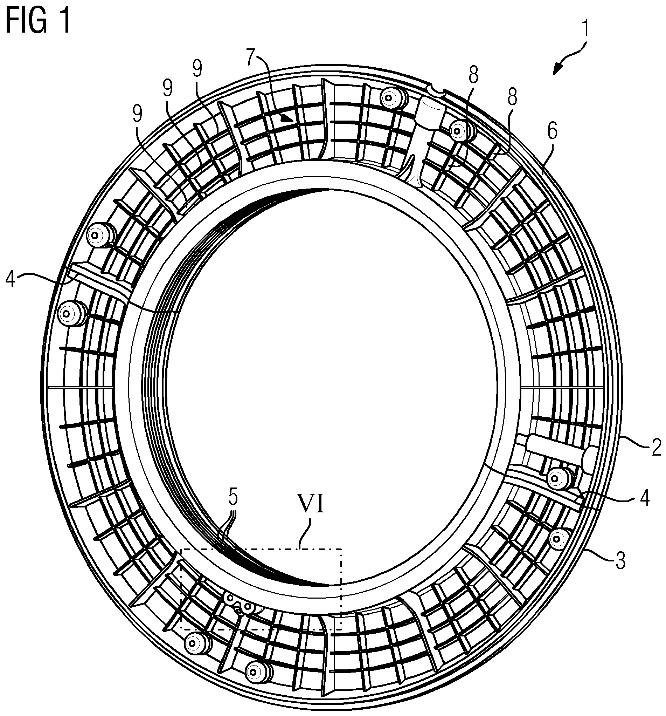

Die Figuren 1 bis 7 zeigen unterschiedliche Ansichten eines Dichtungsrings 1 gemäß einer Ausführungsform der vorliegenden Erfindung, der zur Abdichtung eines ringförmigen Spaltes zwischen einer Welle und einem diese umgebenden Lagerkörper dient, der an oder einteilig mit einer Gehäusewand ausgebildet ist, die insbesondere eine Dampfkammer und eine Ölkammer einer Dampfturbine voneinander trennt. Dabei sind Lagerkörper und Gehäusewand jeweils vorteilhaft in ein Ober- und ein Unterteil unterteilt.

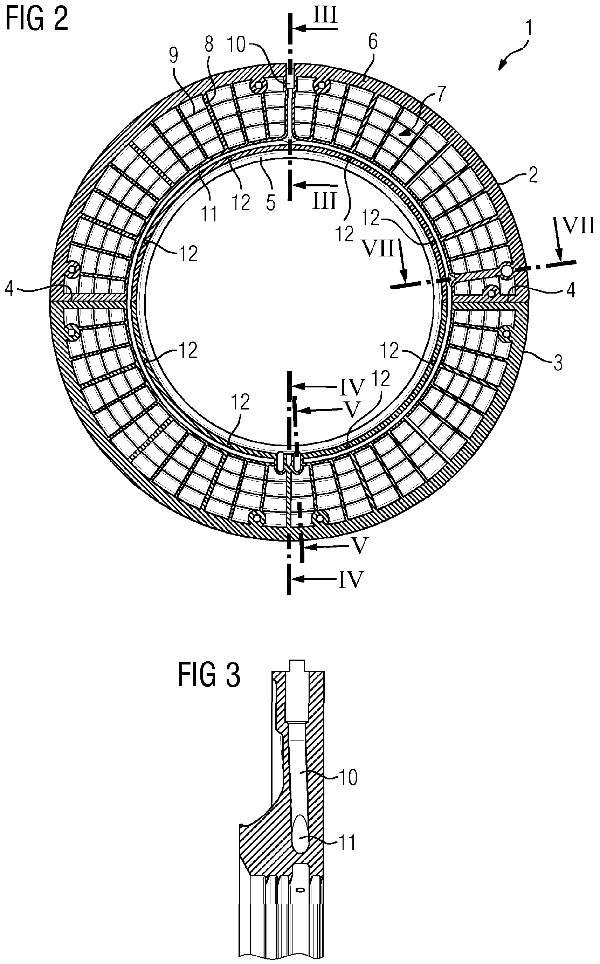

Der Dichtungsring 1 umfasst zwei ringsegmentförmige Dichtungsringhälften 2 und 3, deren einander zugewandten Teilfugen 4 aneinander anliegend positioniert und in diesem Zustand lösbar aufeinandergesetzt werden können, wie es in den Figuren 1 und 2 gezeigt ist. Die lösbare Befestigung kann beispielsweise unter Verwendung von vorliegend nicht näher dargestellten Befestigungsschrauben erfolgen, welche die Teilfugen 4 der Dichtungsringhälften 2 und 3 gegeneinander verspannen. Zusätzlich oder alternativ können die Dichtungsringhälften 2 und 3 aber auch über im Bereich der Teilfugen 4 vorgesehene Zentriermittel zueinander ausgerichtet werden. Ebenso ist eine Ausrichtung der Dichtungsringhälften möglich, indem diese bei der Montage mittels Passung in dem Lagerkörperunter und -oberteil fixiert werden. An der Innenumfangsfläche des Dichtungsrings 1 ist eine Mehrzahl von axial benachbart angeordneten, einwärts vorstehenden und umlaufend ausgebildeten Dichtspitzen 5 vorgesehen, die einteilig mit den Dichtungsringhälften 2 und 3 ausgebildet sind. Entlang der Außenumfangsfläche des Dichtungsrings 1 erstreckt sich ein im Wesentlichen umlaufend ausgebildeter, radial auswärts vorstehender Vorsprung 6, der dazu dient, in einer korrespondierend ausgebildeten umlaufenden Nut des bzw. der Lagerkörper aufgenommen zu werden. Die einander gegenüberliegenden Seitenflächen 7 der Dichtungsringhälften 2 und 3 bzw. des Dichtrings 1 sind mit einer Vielzahl von Versteifungsrippen 8 und 9 versehen, wobei sich die Versteifungsrippen 8 in radialer Richtung und die Versteifungsrippen in Umfangsrichtung erstrecken. Ferner sind an den Seitenflächen 7 benachbart zum Innenumfang umlaufende axiale Anlaufflächen ausgebildet. Innerhalb der Dichtungsringhälften 2 und 3 erstreckt sich unter Bezugnahme auf die Figuren 2 und 3 ein Sperrluftkanalsystem. Das Sperrluftkanalsystem umfasst einen Sperrlufteinlasskanal 10, einen Sperrluftverteilerkanal 11 sowie mehrere Sperrluftauslasskanäle 12. Der Sperrlufteinlasskanal 10, der dazu ausgelegt ist, an diesem eine Sperrlufteinrichtung anzuschließen, erstreckt sich ausgehend vom Außenumfang der Dichtungsringhälfte 2 radial einwärts und mündet in den Sperrluftverteilerkanal 11, der in Umfangsrichtung vorliegend nahezu vollständig umlaufend ausgebildet ist. Die Sperrluftauslasskanäle 12 erstrecken sich jeweils ausgehend von dem Sperrluftverteilerkanal radial einwärts und münden im Bereich der Dichtspitzen 5 in die Innenumfangsfläche des Dichtungsrings, wobei die Sperrluftauslasskanäle vorliegend gleichmäßig über den Umfang des Dichtungsrings 1 verteilt angeordnet sind. Ferner ist ein Druckmesskanal 13 vorgesehen, der dazu ausgelegt ist, an diesen eine Druckmesseinrichtung anzuschließen.

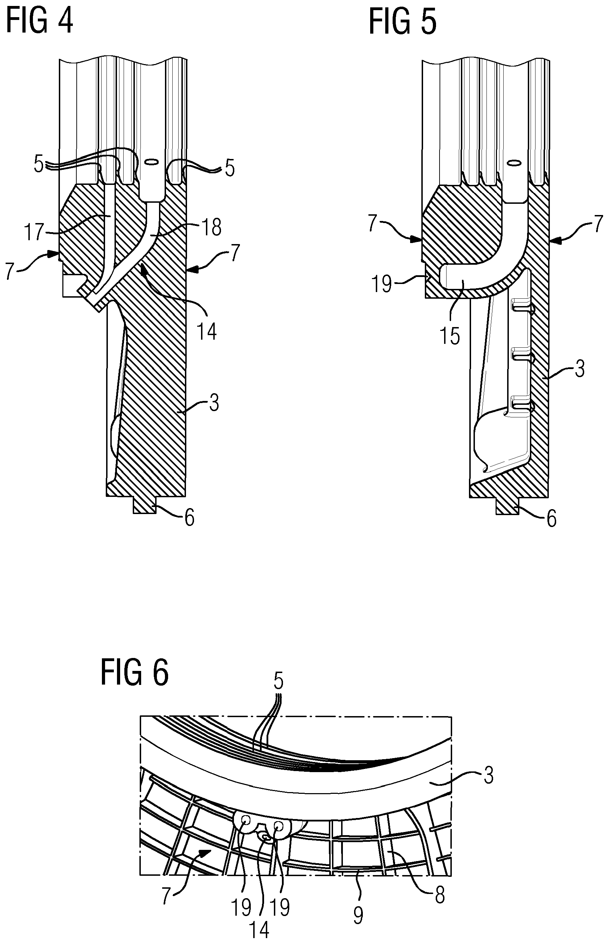

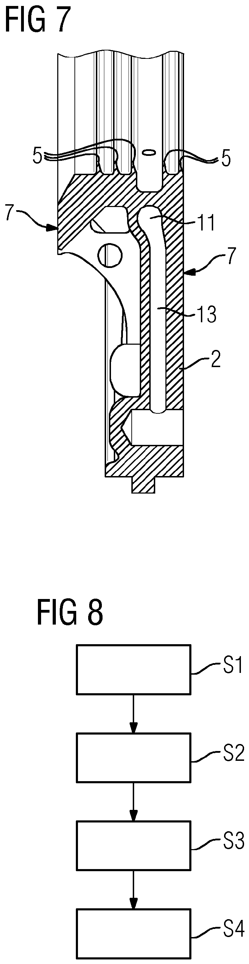

Der Druckmesskanal 13 ist vorliegend in der Dichtungsringhälfte 2 ausgebildet und erstreckt sich ausgehend von der Außenumfangsfläche radial einwärts bis zum Sperrluftverteilerkanal 11, siehe Figur 7. Die untere Dichtungshälfte 3 umfasst unter Bezugnahme auf die Figuren 4 und 5 insgesamt drei Rückführkanäle 14, 15 und 16. Der Ölrückführkanal 14 erstreckt sich ausgehend von einer der Seitenflächen 7 der Dichtungsringhälfte 3 im Wesentlichen radial einwärts in Richtung der Innenumfangsfläche und verzweigt sich in zwei Teilkanäle 17 und 18, die axial voneinander beabstandet im Bereich der Dichtspitzen 5 in die Innenumfangsfläche des Dichtungsrings 1 münden. Die Rückführkanäle 15, 16, die jeweils in Umfangsrichtung benachbart zum Ölrückführkanal 14 angeordnet sind und vorliegend einen größeren Durchmesser als dieser aufweisen, münden ebenfalls im Bereich der Dichtspitzen 5 in die Innenumfangsfläche des Dichtungsrings 1. Sie enden am anderen Ende allerdings kurz vor derjenigen Seitenfläche 7, in die auch der Ölrückführkanal 14 mündet, wobei an der Seitenfläche 7 jeweils ein Bohrungsansatz 19 vorgesehen ist, der eine Position zum Ansetzen eines Bohrwerkzeugs markiert, um ausgehend von der Seitenfläche 7 optional einen Zugang zu den jeweiligen Rückführkanälen 15 und/oder 16 zu bohren.

Zur Herstellung des Dichtungsrings 1 werden bei einem Verfahren gemäß einer Ausführungsform der vorliegenden Erfindung unter Bezugnahme auf Figur 8 in einem ersten Schritt S1 die Dichtungsringhälften 2 und 3 einschließlich des Sperrluftkanalsystems, des Druckmesskanals 13 und der Ölrückführkanäle 14, 15 und 16 unter Einsatz eines additiven Fertigungsverfahrens schichtweise aufgebaut, insbesondere ausgehend von einem pulverförmigen Werkstoff. Als additives Fertigungsverfahren kann beispielsweise das selektive Laserschmelzen (SLM) eingesetzt werden.

In einem weiteren Schritt S2 werden die Teilfugen 4 der jeweiligen Dichtungsringhälften 2 und 3 einer Fräsbearbeitung unterzogen, so dass diese plan aneinander liegend angeordnet werden können.

In einem weiteren Schritt S3 wird der Dichtungsring 1 durch Verspannen der Dichtungsringhälften 2 und 3 zusammengebaut. Zum Verspannen können insbesondere nicht näher dargestellten Befestigungsschrauben verwendet werden, welche die einander gegenüberliegenden Teilfugen 4 der Dichtungsringhälften 2 und 3 gegeneinander pressen.

In einem sich anschließenden Schritt S4 wird zum einen die Außenumfangsfläche des Dichtungsrings 1 im Rahmen einer Dreh-und/oder Schleifbearbeitung mechanisch bearbeitet, um den Vorsprung 6 auf die gewünschten Abmessungen zu bringen. Ferner wird in Schritt S4 die Innenumgangsfläche des Dichtungsrings 1 insbesondere unter Einsatz eines Dreh- und/oder Schleifverfahrens mechanisch bearbeitet, um die Dichtungsspitzen 5 auszubilden.

Ferner können, wenn dies erforderlich sein sollte, die Anfangsbereiche des Sperrlufteinlasskanals 10 und des Druckmesskanals 13 mechanisch bearbeitet werden, um eine Sperrlufteinrichtung bzw. eine Druckmesseinrichtung ordnungsgemäß anschließen zu können.

Vor der Montage des Dichtungsrings können zur Erhöhung der Ölrückführkapazität optional die Ölrückführkanäle 15, 16 aufgebohrt werden, indem am entsprechenden Bohrungsansatz 19 ein Bohrer angesetzt und ein Zugang gebohrt wird.

Ein wesentlicher Vorteil des erfindungsgemäßen Dichtungsrings 1 besteht darin, dass sich dieser einfach, preiswert und schnell fertigen lässt, da sich das Sperrluftkanalsystem, der Druckmesskanal und die Ölrückführkanäle bereits während der additiven Fertigung der Dichtungsringhälften 2 und 3 herstellen lassen, wobei das jeweilige Design der Kanäle im Gegensatz zu einer Bohrbearbeitung sehr frei gewählt werden kann. Letzteres führt beispielsweise dazu, dass sich die Sperrluft bei entsprechender Ausbildung des Sperrluftkanalsystems sehr gleichmäßig über die Innenumfangsfläche des Dichtungsrings 1 verteilt zuführen lässt, was mit einer verbesserten Dichtungsperformance einhergeht. Durch die Ausbildung der Dichtspitzen 5 im Rahmen einer mechanischen Bearbeitung der Dichtungsringhälften 2 entfallen Bauteile, wodurch ebenfalls Kosten bei der Fertigung und Montage eingespart werden. Zudem ist Dank der Ausbildung der Ölrückführkanäle 14, 15 und 16 die Ölrückführkapazität variabel. Dies ist insbesondere dann von Bedeutung, wenn der Dichtungsring 1 seine Dichtwirkung in einigen Fällen mit Sperrluft und in einigen Fällen ohne Sperrluft entfalten soll.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den in den Ansprüchen definierten Schutzumfang der Erfindung zu verlassen.

## Patentansprüche

1. Dichtungsring (1) zur Abdichtung eines ringförmigen Spaltes zwischen einer Welle und einem diese umgebenden Lagerkörper, umfassend zwei ringsegmentförmige Dichtungsringhälften (2,3) und eine Mehrzahl von axial benachbart an der Innenumfangsfläche angeordneten, radial einwärts vorstehenden und umlaufend ausgebildeten Dichtspitzen (5),
**dadurch gekennzeichnet, dass**
die Dichtspitzen (5) einteilig mit den Dichtungsringhälften (2,3) ausgebildet sind,
wobei die Dichtungsringhälften (2,3) unter Einsatz eines additiven Fertigungsverfahrens hergestellt sind, und
wobei die Dichtungsringhälften (2,3) mit einem während der additiven Fertigung hergestellten Sperrluftkanalsystem versehen sind, das einen Sperrlufteinlasskanal (10), zumindest einen mit diesem verbundenen Sperrluftverteilerkanal (11) und mehrere mit dem Sperrluftverteilerkanal (11) verbundene, im Bereich der Dichtspitzen (5) in die Innenumfangsfläche mündende Sperrluftauslasskanäle (12) aufweist.

2. Dichtungsring (1) nach Anspruch 1,
**dadurch gekennzeichnet, dass**
die Dichtungsringhälften (2,3) aus Aluminium hergestellt sind.

3. Dichtungsring (1) nach einem der vorhergehenden Ansprüche,
**dadurch gekennzeichnet, dass**
Seitenflächen (7) der Dichtungsringhälften (2,3) mit Versteifungsrippen (8,9) versehen sind.

4. Dichtungsring (1) nach einem der vorhergehenden Ansprüche,
**dadurch gekennzeichnet, dass**
die Dichtungsringhälften (2,3) unter Einsatz eines additiven Fertigungsverfahrens aus einem pulverförmigen Ausgangswerkstoff hergestellt sind.

5. Dichtungsring (1) nach einem der Ansprüche 1 bis 4,
**dadurch gekennzeichnet, dass**
der Sperrluftverteilerkanal (11) umlaufend oder im Wesentlichen umlaufend ausgebildet ist und die Sperrluftauslasskanäle (12) im Wesentlichen gleichmäßig über den Umfang des Dichtungsrings (1) verteilt angeordnet sind.

6. Dichtungsring (1) nach einem der Ansprüche 1 bis 5,
**dadurch gekennzeichnet, dass**
zumindest eine Dichtungsringhälfte (2,3) mit einem während der additiven Fertigung hergestellten Druckmesskanal (13) versehen ist, der an das Sperrluftkanalsystem angeschlossen und dazu vorgesehen ist, das Sperrluftsystem mit einer Druckmesseinrichtung zu verbinden,
wobei der Druckmesskanal (13) insbesondere in den Sperrluftverteilerkanal (11) mündet.

7. Dichtungsring (1) nach einem der Ansprüche 1 bis 6,
**dadurch gekennzeichnet, dass**
zumindest eine Dichtungsringhälfte (2,3) mit wenigstens einem während der additiven Fertigung hergestellten Ölrückführkanal (14,15,16) versehen ist, der sich von der Innenumfangsfläche in Richtung einer Seitenfläche der Dichtungsringhälfte (2,3) erstreckt.

8. Dichtungsring (1) nach Anspruch 7,
**dadurch gekennzeichnet, dass**
mehrere Ölrückführkanäle (14,15,16) vorgesehen sind, und dass zumindest ein Ölrückführkanal (15,16) kurz vor der Seitenfläche (7) der Dichtungsringhälfte (2,3) endet,
wobei an der Seitenfläche insbesondere ein Bohrungsansatz (19) vorgesehen ist, der eine Position zum Ansetzen eines Bohrwerkzeugs markiert, um ausgehend von der Seitenfläche (7) einen Zugang zu dem Ölrückführkanal (15,16) zu bohren.

9. Verfahren zur Herstellung eines Dichtungsrings (1) nach einem der vorhergehenden Ansprüche, umfassend die Schritte:
- Herstellen der Dichtungsringhälften (2,3) unter Einsatz eines additiven Fertigungsverfahrens, unter Ausbildung des Sperrluftkanalsystems;
- Fräsen der Teilfugen (4) der Dichtungsringhälften (2,3);
- Zusammenbau des Dichtungsrings (1) durch Verspannen der Dichtungsringhälften (2,3) und
- mechanisches Bearbeiten der Außenumfangsfläche und der Innenumfangsfläche des Dichtungsrings (1) unter Ausbildung der Dichtspitzen (5), insbesondere unter Einsatz eines Dreh- und/oder Schleifverfahrens.

10. Verfahren nach Anspruch 9,
**dadurch gekennzeichnet, dass** das Herstellen der Dichtungsringhälften (2,3) unter Einsatz eines additiven Fertigungsverfahrens die Ausbildung des Druckmesskanals (13) und/oder eines oder der Ölrückführkanäle (14,15,16) umfasst.

11. Verfahren nach einem der Ansprüche 9 bis 10,
**dadurch gekennzeichnet, dass**
ein Zugang zu einem im Rahmen der additiven Fertigung hergestellten Ölrückführkanal (14,15,16) und/oder zu einem im Rahmen der additiven Fertigung hergestellten Druckmesskanal (13) gebohrt wird.

## Claims

1. Sealing ring (1) for sealing an annular gap between a shaft and a bearing member which surrounds it, comprising two ring-segment-like sealing ring halves (2, 3) and a plurality of sealing tips (5) which are arranged in an axially adjacent manner on the inner peripheral face and which protrude radially inward and which are constructed circumferentially,
**characterized in that**
the sealing tips (5) are constructed in one piece with the sealing ring halves (2, 3),
wherein the sealing ring halves (2, 3) are produced using an additive production method, and
wherein the sealing ring halves (2, 3) are provided with a sealing air channel system which is produced during the additive production and which has a sealing air inlet channel (10), at least one sealing air distribution channel (11) which is connected thereto and a plurality of sealing air outlet channels (12) which are connected to the sealing air distribution channel (11) and which open in the region of the sealing tips (5) in the inner peripheral face.

2. Sealing ring (1) according to Claim 1,
**characterized in that**
the sealing ring halves (2, 3) are produced from aluminum.

3. Sealing ring (1) according to either of the preceding claims,
**characterized in that**
side faces (7) of the sealing ring halves (2, 3) are provided with reinforcement ribs (8, 9).

4. Sealing ring (1) according to one of the preceding claims,
**characterized in that**
the sealing ring halves (2, 3) are produced using an additive production method from a powdered starting material.

5. Sealing ring (1) according to one of Claims 1 to 4,
**characterized in that**
the sealing air distribution channel (11) is constructed in a circumferential or substantially circumferential manner and the sealing air outlet channels (12) are arranged in a state distributed in a substantially uniform manner over the periphery of the sealing ring (1).

6. Sealing ring (1) according to one of Claims 1 to 5,
**characterized in that**
at least one sealing ring half (2, 3) is provided with a pressure measurement channel (13) which is produced during the additive production and which is connected to the sealing air channel system and which is provided to connect the sealing air system to a pressure measurement device,
wherein the pressure measurement channel (13) opens in particular in the sealing air distribution channel (11).

7. Sealing ring (1) according to one of Claims 1 to 6,
**characterized in that**
at least one sealing ring half (2, 3) is provided with at least one oil return channel (14, 15, 16) which is produced during the additive production and which extends from the inner peripheral face in the direction of a side face of the sealing ring half (2, 3) .

8. Sealing ring (1) according to Claim 7,
**characterized in that**
a plurality of oil return channels (14, 15, 16) are provided and **in that** at least one oil return channel (15, 16) terminates shortly before the side face (7) of the sealing ring half (2, 3), wherein there is provided on the side face in particular a drill attachment (19) which marks a position for placing a drilling tool in order starting from the side face (7) to drill an access to the oil return channel (15, 16).

9. Method for producing a sealing ring (1) according to one of the preceding claims, comprising the steps of:
- producing the sealing ring halves (2, 3) using an additive production method, with the sealing air channel system being formed;
- milling the parting joints (4) of the sealing ring halves (2, 3) ;
- assembling the sealing ring (1) by clamping the sealing ring halves (2, 3), and
- mechanically processing the outer peripheral face and the inner peripheral face of the sealing ring (1) with the sealing tips (5) being formed, in particular using a turning and/or grinding method.

10. Method according to Claim 9,
**characterized in that** the production of the sealing ring halves (2, 3) using an additive production method involves the formation of the pressure measurement channel (13) and/or one of or the oil return channels (14, 15, 16).

11. Method according to either of Claims 9 and 10,
**characterized in that**
an access to an oil return channel (14, 15, 16) which is produced in the context of the additive production and/or to a pressure measurement channel (13) which is produced in the context of the additive production is drilled.

## Revendications

1. Bague (1) d'étanchéité pour rendre étanche un intervalle annulaire entre un arbre et un corps de palier entourant celui-ci, comprenant deux moitiés (2, 3) de bague d'étanchéité en forme de segment de bague et une pluralité de pointes (5) d'étanchéité, disposées en étant voisines axialement de la surface périphérique intérieure, en saillie vers l'intérieur radialement et constituées en faisant le tour,
**caractérisée en ce que**
les pointes (5) d'étanchéité sont constituées en une pièce avec les moitiés (2, 3) de bague d'étanchéité,
dans laquelle les moitiés (2, 3) de bague d'étanchéité sont fabriquées en utilisant un procédé de fabrication additif, et
dans laquelle les moitiés (2, 3) de bague d'étanchéité sont pourvues d'un système de conduit d'air d'arrêt, qui est produit pendant la fabrication additif et qui a un conduit (10) d'entrée d'air d'arrêt, au moins un conduit (11) de répartition d'air d'arrêt, communiquant avec celui-ci et plusieurs conduits (12) de sortie d'air d'arrêt communiquant avec le conduit (11) de répartition d'air d'arrêt et débouchant dans la surface périphérique intérieure dans la partie des pointes (5) d'étanchéité.

2. Bague (1) d'étanchéité suivant la revendication 1,
**caractérisée en ce que**
les moitiés (2, 3) de bague d'étanchéité sont en aluminium.

3. Bague (1) d'étanchéité suivant l'une des revendications précédentes,
**caractérisée en ce que**
des surfaces (7) latérales des moitiés (2, 3) de bague d'étanchéité sont pourvues de nervures (8, 9) de renfort.

4. Bague (1) d'étanchéité suivant l'une des revendications précédentes,
**caractérisée en ce que**
les moitiés (2, 3) de bague d'étanchéité sont produites en un matériau de départ pulvérulent en utilisant un procédé de fabrication additif.

5. Bague (1) d'étanchéité suivant l'une des revendications 1 à 4,
**caractérisée en ce que**
le conduit (11) de répartition d'air d'arrêt est constitué en faisant le tour ou sensiblement en faisant le tour et les conduits (12) de sortie d'air d'arrêt sont répartis sensiblement uniformément sur le pourtour de la bague (1) d'étanchéité.

6. Bague (1) d'étanchéité suivant l'une des revendications 1 à 5,
**caractérisée en ce que**
au moins une moitié (2, 3) de bague d'étanchéité est pourvue d'un conduit (13) de mesure de la pression, qui est produit pendant la fabrication additif, qui est raccordé au système de conduit d'air d'arrêt et qui est prévu pour mettre le système d'air d'arrêt en communication avec un dispositif de mesure de la pression,
dans lequel le conduit (13) de mesure de la pression débouche notamment dans le conduit (11) de répartition de l'air d'arrêt.

7. Bague (1) d'étanchéité suivant l'une des revendications 1 à 6,
**caractérisée en ce que**
au moins une moitié (2, 3) de bague d'étanchéité est pourvue d'au moins un conduit (14, 15, 16) de retour d'huile, qui est produit pendant la fabrication additif et qui s'étend de la surface périphérique intérieure en direction d'une surface latérale de la moitié (2, 3) de bague d'étanchéité.

8. Bague (1) d'étanchéité suivant la revendication 7,
**caractérisée en ce que**
il est prévu plusieurs conduits (14, 15, 16) de retour d'huile et **en ce que** au moins un conduit (15, 16) de retour d'huile se termine peu avant la surface (7) latérale des moitiés (2, 3) de bague d'étanchéité, dans laquelle il est prévu sur la surface latérale notamment un tenon (19) à perçage, qui repère une position pour mettre un outil d'alésage afin d'aléser à partir de la surface (7) latérale un accès au conduit (15, 16) de retour d'huile.

9. Procédé de production d'une bague (1) d'étanchéité suivant l'une des revendications précédentes comprenant les stades :
- on produit les moitiés (2, 3) de bague d'étanchéité en utilisant un procédé de fabrication additif avec constitution du système de conduit d'air d'arrêt;
- on fraise les joints (4) des moitiés (2, 3) de bague d'étanchéité;
- on assemble la bague (1) d'étanchéité par blocage des moitiés (2, 3) de bague d'étanchéité et
- on usine mécaniquement la surface de pourtour extérieure et la surface de pourtour intérieure de la bague (1) d'étanchéité en constituant des pointes (5) d'étanchéité, notamment en utilisant un procédé au tour et/ou de meulage.

10. Procédé suivant la revendication 9,
**caractérisé en ce que** la production des moitiés (2, 3) de bague d'étanchéité en utilisant un procédé de fabrication additif comprend la constitution du conduit (13) de mesure de la pression et/ou d'un ou des conduits (14, 15, 16) de retour d'huile.

11. Procédé suivant l'une des revendications 9 à 10,
**caractérisé en ce qu'**on alèse un accès à un conduit (14, 15, 16) de retour d'huile produit dans le cadre de la fabrication additif et/ou à un conduit (13) de mesure de la pression produit dans le cadre de la fabrication additive.
